# EUROPEAN PATENT APPLICATION

(11) **EP 4 417 508 A1**
(43) Date of publication of application: **21.08.2024**
(21) Application number: 23156626.6
(22) Date of filing: 14.02.2023
(51) Int. Cl.: B64C 1/32, B64D 25/08, B64D 25/12, B64D 25/14, B64D 25/16

(54) **METHOD OF CREATING AN EMERGENCY EGRESS IN A VEHICLE, EMERGENCY EGRESS AND VEHICLE**

(71) Applicant: Volocopter GmbH, 76646 Bruchsal (DE)
(72) Inventor: Grimm, Tobias, 75015 Bretten (DE); Rodriguez, Javier, 69125 Heidelberg (DE)
(74) Representative: LBP Lemcke, Brommer & Partner Patentanwälte mbB

(57) **Abstract**

We describe a method of creating an emergency egress (1) in a vehicle, in particular in an aircraft, comprising:
a) providing a vehicle having an emergency egress opening in its chassis or fuselage (3);
b) attaching at least one cover panel (2) to said chassis or fuselage (3), in particular in an edge region of said emergency egress opening, which cover panel (2) at least partly covers said emergency egress opening;
c) embedding in a contact region of said cover panel (2) and said chassis or fuselage (3), either in an interface layer (4) between said cover panel (2) and said chassis or fuselage (3) or in said cover panel (2), at least one fluid-tight bag (4b) in a folded-in or deflated state thereof;
d) inflating said bag (4b) by injecting a fluid under pressure (pᵢ') into said bag (4b);
e) removing said cover panel (2) from said chassis or fuselage (3).

Further described are an emergency egress (1) and a vehicle having same.

## Description

The invention relates to a method of creating an emergency egress in a vehicle, in particular in an aircraft, according to claim 1.

The invention also relates to an emergency egress in a vehicle, in particular in an aircraft, according to claim 7.

The invention further relates to a vehicle, especially an aircraft, having at least one emergency egress, according to claim 15.

Due to safety reasons or regulations, many vehicles, such as trains, coaches or aircraft, especially when used for public transportation, are equipped with emergency egresses or emergency exits. Current common vehicle emergency exit approaches are based on removable frames using pins or non-permanent fasteners, breakable glass, bonding breakage by using steel wires or the use of explosives.

For a safety-critical feature, such as providing an emergency egress, a simple design and simple operation are advantageous. Complex systems are often heavier and prone to failure or unreliability. Some of the known designs require special tools to be operated or high forces to be applied. In addition, some state-of-the-art solutions pose an additional safety challenge, e.g., due to the use of explosives.

There is a need for a method and an emergency egress of the above-defined type which is simple in its design and simple to operate, preferably without any special tools or without the requirement for high forces, and which does not present an additional safety challenge as in the case of systems comprising explosives.

This object is achieved by means of a method having the features of appended claim 1, by means of an emergency egress having the features of appended claim 7 and by means of a vehicle as defined in appended claim 15.

Advantageous further embodiments of the invention are defined in the sub-claims.

According to the invention, a method of creating an emergency egress in a vehicle, in particular in an aircraft, comprises: a) providing a vehicle having an emergency egress opening in its chassis or fuselage; b) attaching at least one cover panel to said chassis or fuselage, in particular in an edge region of said emergency egress opening, which cover panel at least partly covers said emergency egress opening; c) embedding in a contact region of said cover panel and said chassis or fuselage, either in an interface layer between said cover panel and said chassis or fuselage or in said cover panel itself, at least one fluid-tight bag in a folded-in or deflated state thereof; d) inflating said bag by injecting a fluid under pressure into said bag; and e) removing said cover panel from said chassis or fuselage.

Further according to the invention, an emergency egress in a vehicle, in particular in an aircraft, comprises: an emergency egress opening in a chassis or fuselage of said vehicle; at least one cover panel attached to said chassis or fuselage, in particular in an edge region of said emergency egress opening, which cover panel covers at least part of said emergency egress opening; at least one fluid-tight bag in a folded-in state thereof, said bag being embedded in a contact region of said cover panel and said chassis or fuselage, either in an interface layer between said cover panel and said chassis or fuselage or within a structure of said cover panel; and fluid and pressure means in operable fluid connection with said bag for inflating said bag by injecting a fluid under pressure into said bag.

A vehicle according to the invention, especially in the form of an aircraft, has at least one emergency egress in accordance with the present invention.

In this way, the present invention reduces the complexity and safety risks of emergency exits. The emergency egress is embedded into the vehicle's structure and uses its inherent weakness, e.g., thickness-wise or out of plane, when needed, instead of adding new features. The emergency egress according to the present invention does not modify a strength of the vehicle's structure until it is activated.

The emergency egress according to the present invention is self-contained, preventing any secondary effects, such as due to ejected debris, on occupant safety. In addition, owing to its embedded nature, it is protected against external hazards like environmental effects (sand/dust, water, etc.).

Further owing to its embedded nature, an overall fit-form-function of the vehicle's structure remains unchanged.

Although a preferred use of the inventive method and emergency egress is related to aircraft, the invention is by no means limited in this respect. It can be applied to all kinds of vehicles and also to stationary objects, such as containers, buildings, shelters or the like.

Furthermore, the term "emergency egress" as used herein does not necessarily mean that an opening toward the outside or surrounding of a vehicle must be created. Said term also comprises opening of a passage toward another (safer) part or area of the vehicle.

Furthermore, the term "cover panel" as used herein does not necessarily mean that we are dealing with a flat or plate-like structure. Said term also comprises any another element of any suitable shape and size that can be used to (temporarily) close said emergency egress opening.

In the nominal status of the emergency egress, a structure (i.e., said chassis or fuselage or - more generally speaking - an outer shell) shall be held in place and fulfill its intended function, e.g., of closing off the vehicle with respect to the environment. In case of, e.g., an emergency, a certain part of said structure (e.g., said cover panel) shall be removed to grant access to another area of the vehicle or to egress said vehicle.

In general, the present invention thus describes a mechanism to remove a certain part of the vehicle structure by introducing an intended damage of predetermined extent. As stated before, the mechanism comprises a gas-tight or water-tight, i.e., fluid-tight bag that is embedded in a preferably adhesive or cohesive connection with a removable structure (i.e., said cover panel) to a surrounding structure (i.e., the remaining chassis or fuselage).

The above-defined nominal status refers to the untriggered system in its normal state. In said nominal status, the interface layer is devised to be capable of securely transferring any designated loads between the removable structure and the surrounding structure.

In an embodiment, the removable structure can be bonded or welded via said interface layer to the surrounding structure. Inside the interface layer a deflated fluid-tight bag is placed, which bag preferably occupies a confined volume inside the interface layer. This volume, which holds the deflated bag, is preferably smaller than the space it requires to inflate the bag.

In order to operate the mechanism, a user (e.g., a passenger or pilot) may, in one embodiment, open a valve in order to inflate said bag. Alternatively, an automatic system can be used to trigger the mechanism, e.g., by using a smoke and/or temperature sensor. The bag is then filled and pressurized with a gas or a liquid. The increased volume occupied by the inflated bag initiates a force on the embedding structure, e.g., the interface layer or the cover panel itself, which in turn leads to said intended damage.

Depending on the structure and/or materials used, this damage may take the form of a crack inside the interface layer and/or a debonding or detaching between the interface layer and the removable structure (i.e., said cover panel) and/or between the interface layer and the surrounding structure (i.e., said chassis or fuselage).

In alternative embodiments, the damage can by generated within a material of the removeable structure and/or within a material of the surrounding structure, although the former is obviously preferred.

By applying additional force on the removable structure, for example by manually exerting a pushing force, the damage may be increased until the removable structure can be detached completely. The required force shall be within an acceptable range, equivalent to any standard emergency egress system. Advantageously, the triggering of the inflating bag does not "blast off" the removeable structure, but only initiates said crack or debonding. A passenger can then egress the vehicle by applying pressure to the already weakened structure. Hence, even in case of unwillingly or erroneous triggering, the removeable structure does not just fall off, thus allowing continued (limited) use of the vehicle, e.g., for landing the aircraft. Therefore, in an embodiment the applicable bag pressure, i.e., the initiated damage is carefully adapted for the applicable material/structure, etc. of the chassis or fuselage, e.g., by way of experiment.

The following embodiments of the invention have proven to be particularly advantageous:
An advantageous further development of the method according to the invention comprises attaching said cover panel to said chassis or fuselage by means of at least one adhesive or cohesive bonding layer.

Such an embodiment is particularly simple and inexpensive to implement.

Another advantageous further development of the method according to the invention comprises embedding said bag within a bonding material of said bonding layer.

In such an embodiment, the inflation of the bag makes it easy to weaken or break the bonding material in a targeted manner.

The at least one bag may be circumferentially disposed with respect to an edge of the opening. However, it is also possible to arrange several bags around the opening, for example without gaps or with suitable distances between the bags, in order to achieve the intended weakening effect.

Yet another advantageous further development of the method according to the invention comprises placing said bag between two strips of an interface material comprised in said interface layer, in particular between two strips of a bonding material of said bonding layer.

In such an embodiment, a confined volume available for the unfilled bag can be determined via the spacing of the said strips, in order to specifically preset the weakening effect achievable during inflation of the bag in this way.

A preferred further development of the method according to the invention comprises removing said cover panel manually in step e).

In this way, the emergency egress can be created easily without having to resort to special tools or the like for this purpose.

Another preferred further development of the method according to the invention comprises choosing at least one of an injection pressure of said fluid, a compressibility of said fluid, a volume of said inflated bag, a bonding material of said bonding layer, an adhesion of said bonding layer, a thickness and/or width of said bonding layer, a structural stability of said interface layer and a structural stability of said cover panel such that said cover panel remains attached to said chassis or fuselage when inflating said bag in step d).

In a preferred embodiment of the method according to the invention said fluid can be either water, air, a suitable gas or oil.

In another preferred embodiment of the method according to the invention said injection pressure depends on bag size and material transversal strength. It has to be higher than atmospheric pressure (e.g., 1 bar). The pressure is advantageously tailored for each material/size combination.

In yet another preferred embodiment of the method according to the invention said bonding material or adhesive can be an epoxy-based adhesive, in particular if composite materials are used. Also, cyanoacrylate (i.e., superglue) is an interesting choice because it is brittle.

In still another preferred embodiment of the method according to the invention a layer height of the embedded layer, i.e., a corresponding dimension of said inflatable bag is dependent on a particular application. For light aircraft use a layer height of 10-15 mm may be preferred while for civil transport (bus, train) said layer height may be 30-40 mm.

By suitably adjusting at least the said parameters, it is possible to ensure that the cover panel is not simply blown away or lost in an uncontrolled manner when the method according to the invention is used, so that the vehicle can continue to be used at least for a short time, for example to land an aircraft in a controlled manner.

Within the scope of a corresponding further development of the emergency egress according to the invention, it can be provided that said fluid and pressure means are operable either manually by a user or automatically by a control unit of the vehicle.

The latter design makes it possible, in particular, to open the emergency egress even if the passengers on board the vehicle are not (or no longer) able to do so themselves.

Within the scope of another corresponding further development of the emergency egress according to the invention, it can be provided that said cover panel is attached to said chassis or fuselage by means of an adhesive or cohesive bonding layer. In this context, an adhesion failure occurs when a contact surfaces between the adhesive and the substrate (e.g., said cover panel) separate. In contrast, a cohesion failure occurs when the bonds on the molecules of the adhesive fail (internally in the adhesive material).

The particular advantages of such a design have already been pointed out above.

Within the scope of yet a further development of the emergency egress according to the invention, it can be provided that an adhesive or cohesive bonding material of said bonding layer constitutes said interface layer and said bag is embedded within said bonding material.

The particular advantages of such a design have also been pointed out elsewhere.

Within the scope of a highly advantageous further development of the emergency egress according to the invention, it can be provided that said bag is arranged in a confined volume between two strips of an interface material comprised in said interface layer, in particular between two strips of a bonding material of said bonding layer.

Such design has proved to be particularly advantageous for the reasons already given in detail above.

Within the scope of a preferred further development of the emergency egress according to the invention, it can be provided that said bag, in its inflated state, has a volume that is greater than said confined volume, wherein, as a rule of thumb, there should be an increase in volume of about 2 to 5.

This way, when inflated, the bag can fully develop its intended weakening effect.

Within the scope of still another development of the emergency egress according to the invention, it can be provided that with said bag in its inflated state, said interface layer or said structure of said cover panel is partially destroyed or weakened for enabling manual removal of said cover panel. In this context, a typical force that a human can deliver depends on its direction, i.e., horizontally at chest level: 300N; downwards: weight of a person (50-120 kg).

It has already been repeatedly pointed out that such an embodiment is particularly advantageous because it does not require any additional tools or the like to open the emergency egress.

Within the scope of a highly preferred further development of the emergency egress according to the invention, it can be provided that at least one of an injection pressure of said fluid, a compressibility of said fluid, a volume of said inflated bag, a bonding material of said bonding layer, an adhesion of said bonding layer, a thickness and/or a width of said bonding layer, said confined volume according, a structural stability of said interface layer and a structural stability of said cover panel are adjusted such that said cover panel remains attached to said chassis or fuselage when inflating said bag, cf. the preferred embodiments of the inventive method cited above..

By suitably adjusting at least one of the above-mentioned parameters, the weakening effect during inflation of the bag can be easily and reliably adjusted, which the skilled person can easily verify, for example, by means of simple tests or experiments.

The invention is self-evidently not limited to the use of only one cover panel. Rather, any number or plurality of cover panels can be used, which together close the emergency egress opening in the nominal state.

Further features and advantages of the invention will become apparent from the following description of embodiments based on the drawings.
Figure 1 schematically shows a (fixed) structure with a removable panel or element;
Figure 2 shows in section and in detail a connection area between the structure and the panel according to Figure 1 in a nominal state;
Figure 3 shows in section and detail the connection area according to Figure 2 in a weakened state with inflated bag;
Figure 4 shows in section and in detail a connection area analogous to Figure 2 in another embodiment of the invention;
Figure 5 shows in section and in detail a connection area analogous to Figure 2 in yet another embodiment of the invention; and
Figure 6 shows a vehicle according to the invention in the form of an aircraft.

In all figures, the same reference numerals denote identical or at least identically functioning elements.

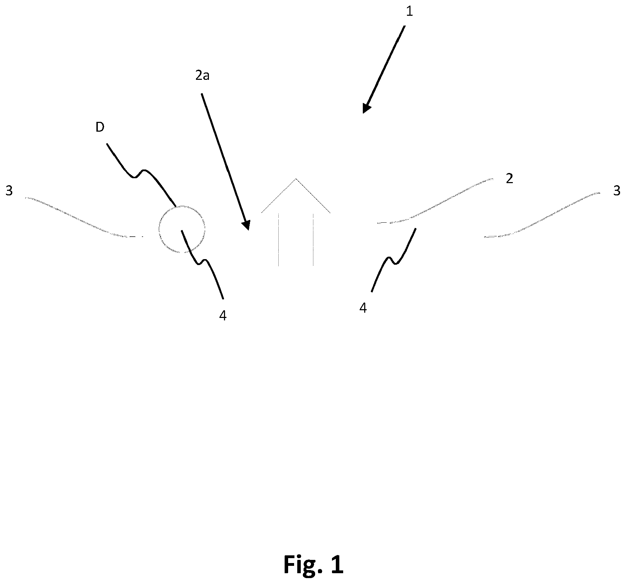

Figure 1 shows schematically and in section an emergency egress according to the invention, which is designated as a whole by reference numeral 1. The emergency egress 1 is formed by a single cover panel 2 covering an emergency egress opening 2a, which cover panel 2 is preferably connected all around said opening 2a to a (fixed) structure 3 in the form of a vehicle chassis or an aircraft fuselage by an interface layer 4. Said cover panel 2 is removable from said structure 3 in the direction of the solid black arrow. Preferably, the interface layer 4 is an adhesive layer.

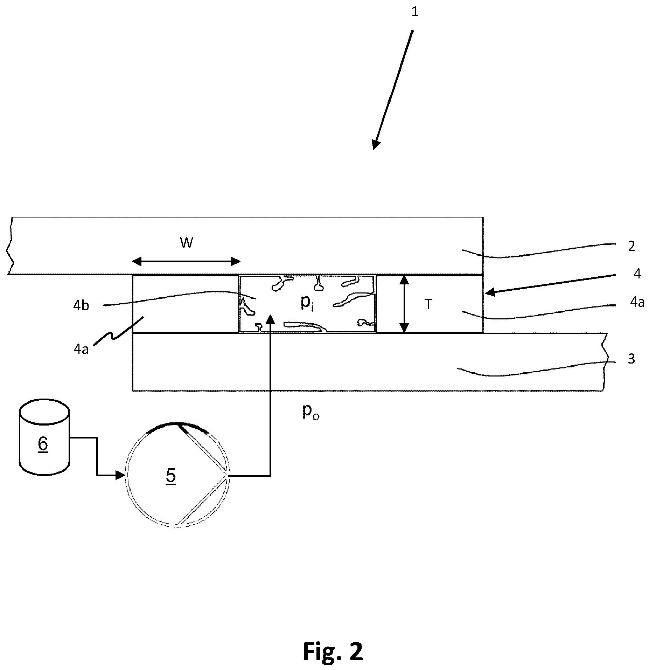

Possible embodiments according to the invention, especially of the interface layer 4, are shown in detail in the following Figures 2 to 5, cf. reference numeral D in Figure 1, which refers to a contact region between the cover panel 2 and the structure 3.

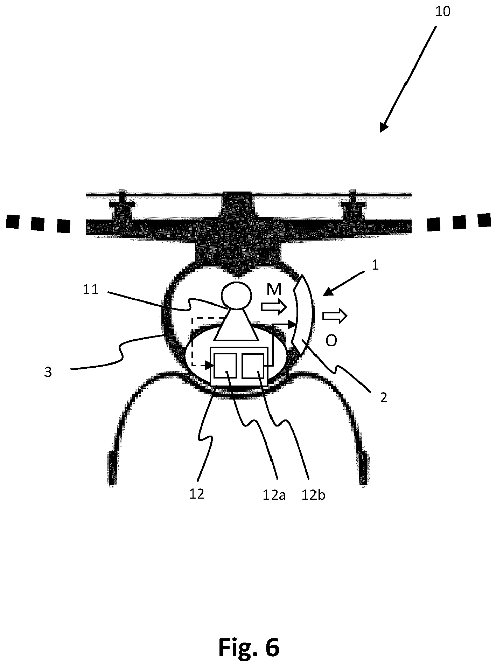

Figure 2 shows a first embodiment of the emergency egress 1 and the interface layer 4. The interface layer 4 comprises two parallel running strips 4a of an interface material, each one of width W and thickness T, which can either be formed as adhesive strips themselves or which are formed in the form of spacers, which are respectively connected, preferably glued, with their upper side and their lower side to the cover panel 2 and to the structure 3. Between the strips 4a on the one hand and the cover panel 2 or the structure 3 on the other hand, a delimited volume is defined which, in the embodiment shown, is completely filled with a deflated or collapsed fluid-tight bag 4b. A correspondingly low inner pressure pᵢ prevails in the bag 4b. Outside pressure is denoted pₒ. The bag 4b is operatively connected to a delivery or pump means 5 and a supply means 6 for a suitable fluid, i.e., a gas or a liquid, with which fluid the bag 4b can be inflated under pressure (pressurized, pᵢ). The command for this can come either from a human user or from an automatic control unit (compare figure 6).

Alternatively, a gas (pressure) generating means as, e.g., in an airbag could be used here and in any other embodiment of the invention instead of said pump means 5 and supply means 6.

During pressurization of the bag 4b, the acting force is proportional to (pᵢ - pₒ). Or the other way around, the required inflation pressure pᵢ depends on pₒ.

As an illustrative example: if the vehicle (aircraft) were under water, one would need a higher inflation pressure (pᵢ) because of the surrounding water pressure (Pc).

In the nominal state as shown in Figure 2, the cover panel 2 is securely and firmly connected to the structure 3 via the interface layer 4.

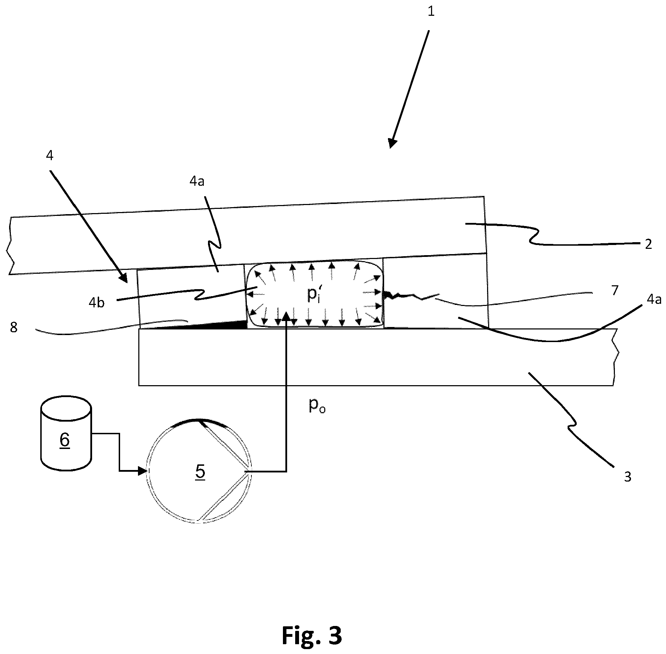

Figure 3 shows a state as it appears after the bag 4b has been inflated with the said fluid as provided by the pump means 5 and the supply means 6. Internal pressure pᵢ' > pᵢ now prevails in the bag 4b. The volume of the inflated bag 4b is greater than the confined volume between the strips 4a and the cover panel 2 or the structure 3, so that a defined destruction or weakening of the connection between the cover panel 2 and the structure 3 occurs, as shown. This weakening may in particular comprise a crack 7 in at least one strip 4a of the interface layer 4 or a partial separation of the (adhesive) bond between at least one strip 4a of the interface layer 4 and at least one of the other joining partners (cover panel 2 and structure 3), as schematically shown at reference numeral 8. Such separation may also (alternatively or additionally) occur between cover panel 2 and interface layer 4. Different adhesives may be used on respective sides of strips 4a to achieve an intended debonding.

Advantageously, said weakening is sufficient to allow a passenger on board a vehicle equipped with the emergency egress 1 to manually remove the cover panel 2 from the structure 3, preferably by pushing it outwards, without any other means.

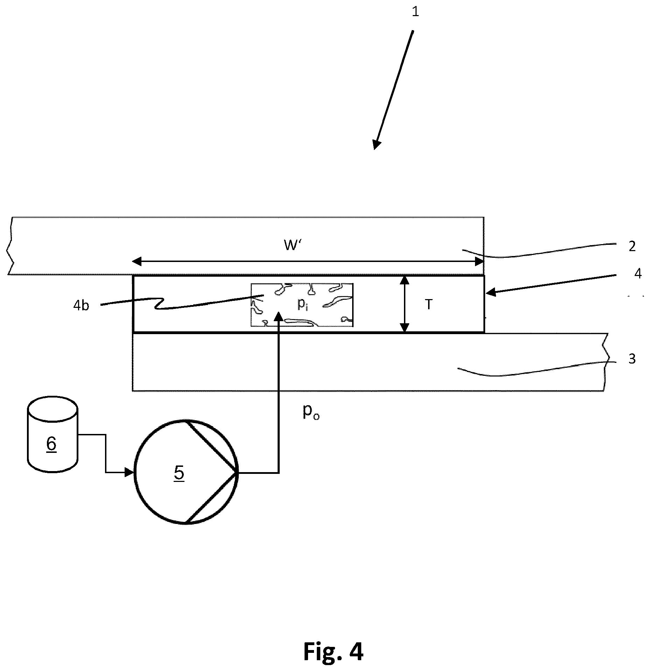

Figure 4 shows the said nominal state in an alternative embodiment of the emergency egress 1. In the following, only the essential differences to the design in Figure 2 will be discussed in more detail.

According to Figure 4, the (collapsed) fluid-tight bag 4b is embedded in the interface layer 4 of width W' and thickness T, which is preferably formed as a continuous adhesive layer, as shown. This also results in a defined, closed volume for the collapsed or deflated bag 4b (cf. Figure 2) so that it can specifically weaken or destroy the interface layer 4 during inflation. Care must be taken here to ensure that a material for the interface layer 4 has suitable material properties, for example that it is not so elastic that inflation of the bag 4b has no destructive effect on the connection between the cover panel 2 and the structure 3.

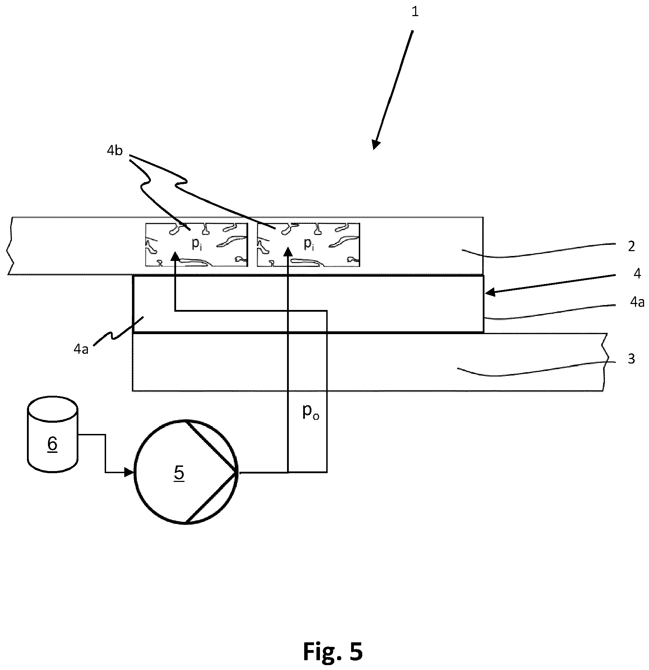

Figure 5 shows yet another alternative embodiment of emergency egress 1 in which there is more than one inflatable bag 4b; however, this can in principle also be the case in all other embodiments of the invention. It is essential that the bag(s) 4b according to Figure 5 is/are not arranged in the interface layer 4, but in a material of the cover panel 2 itself, whereby in the case of inflation an intended weakening or destruction of the cover panel 2 occurs in the area shown, which will in turn weaken its connection with structure 3 via interface layer 4.

Thus, also in the case of the embodiments according to Figure 4 and Figure 5, the emergency egress 1 can fully perform its intended function: by weakening the connection between the cover panel 2 and the structure 3 or by weakening the cover panel 2 itself, the cover panel 2 can subsequently be removed from the structure 3 without any major effort.

In principle, it would also be possible to provide corresponding weakening of the structure 3 (by including bag 4b in said structure 3) to achieve the same effect; however, this may have a detrimental effect on the subsequent reusability of the structure 3 or the vehicle, so that such an embodiment would be rather less advantageous.

Finally, Figure 6 shows the use of an emergency egress 1 according to the invention on a special vehicle in the form of an aircraft or multicopter 10. On board the aircraft 10 there is a human person 11, for example a passenger or a pilot. After activation of the emergency egress 1 according to the invention, as described above, the person 11 is able to manually push the cover panel 2 of the emergency egress 1 in the direction of the arrow M outwards from fuselage 3 (cf. arrow O).

The emergency egress 1 is activated either by corresponding manual or other input from the person 11 (dashed line in Figure 6) or automatically as determined by a correspondingly designed control unit shown at reference numeral 12. The control unit 12 preferably comprises an input device 12a for the above-mentioned input as well as an additional device 12b, which additional device 12b is designed to activate the emergency egress 1 automatically, for example by interaction with suitable sensors on board the aircraft 10, such as temperature sensors or smoke detectors (not shown). To achieve this, the control unit 12 preferably commands the delivery means 5 (cf. Figures 2 to 5) accordingly in terms of fluid pressure, amount of fluid, operating time, etc.

## Claims

1. A method of creating an emergency egress (1) in a vehicle (10), in particular in an aircraft, comprising:
a) providing a vehicle (10) having an emergency egress opening (2a) in its chassis or fuselage (3);
b) attaching at least one cover panel (2) to said chassis or fuselage (3), in particular in an edge region of said emergency egress opening (2a), which cover panel (2) at least partly covers said emergency egress opening (2a);
c) embedding in a contact region of said cover panel (2) and said chassis or fuselage (3), either in an interface layer (4) between said cover panel (2) and said chassis or fuselage (3) or in said cover panel (2), at least one fluid-tight bag (4b) in a folded-in or deflated state thereof;
d) inflating said bag (4b) by injecting a fluid under pressure (pᵢ') into said bag (4b);
e) removing said cover panel (2) from said chassis or fuselage (3).

2. The method of claim 1, comprising:
attaching said cover panel (2) to said chassis or fuselage (3) by means of at least one adhesive or cohesive bonding layer.

3. The method of claim 2, comprising:
embedding said bag (4b) within a bonding material of said bonding layer.

4. The method of claim 2, comprising:
placing said bag (4b) between two strips (4a) of an interface material comprised in said interface layer (4), in particular between two strips (4a) of a bonding material of said bonding layer.

5. The method of any one of claims 1 through 4, comprising:
removing said cover panel (2) manually in step e).

6. The method of any one of claims 1 through 5, comprising:
choosing at least one of an injection pressure of said fluid, a compressibility of said fluid, a volume of said inflated bag (4b), a bonding material of said bonding layer, an adhesion of said bonding layer, a thickness (T) and/or width (W, W') of said bonding layer, a structural stability of said interface layer (4) and a structural stability of said cover panel (2) such that said cover panel (2) remains attached to said chassis or fuselage (3) when inflating said bag (4b) in step d).

7. An emergency egress (1) in in a vehicle (10), in particular in an aircraft, comprising:
an emergency egress opening (2a) in a chassis or fuselage (3) of said vehicle (10);
at least one cover panel (2) attached to said chassis or fuselage (3), in particular in an edge region of said emergency egress opening (2a), which cover panel (2) covers at least part of said emergency egress opening (2a);
at least one fluid-tight bag (4b) in a folded-in or deflated state thereof, said bag (4b) being embedded in a contact region of said cover panel (2) and
said chassis or fuselage (3), either in an interface layer (4) between said cover panel (2) and said chassis or fuselage (3) or within a structure of said cover panel (2); and
fluid and pressure means (5, 6) in operable fluid connection with said bag (4b) for inflating said bag (4b) by injecting a fluid under pressure into said bag (4b).

8. The emergency egress (1) of claim 7, wherein
said fluid and pressure means (5, 6) are operable either manually by a user (11) or automatically by a control unit (12) of the vehicle (10).

9. The emergency egress (1) of claim 7 or 8, wherein
said cover panel (2) is attached to said chassis or fuselage (3) by means of an adhesive or cohesive bonding layer.

10. The emergency egress (1) of claim 9, wherein
an adhesive or cohesive bonding material of said bonding layer constitutes said interface layer (4) and said bag (4b) is embedded within said bonding material.

11. The emergency egress (1) of any one of claims 7 through 10, wherein said bag (4b) is arranged in a confined volume between two strips (4a) of an interface material comprised in said interface layer (4), in particular between two strips (4a) of a bonding material of said bonding layer according to claim 9.

12. The emergency egress (1) of claim 11, wherein
said bag (4b), in its inflated state, has a volume that is greater than said confined volume.

13. The emergency egress (1) of any one of claims 7 through 12, wherein
with said bag (4b) in its inflated state, said interface layer (4) or said structure of said cover panel (2) is partially destroyed or weakened for enabling manual removal of said cover panel (2).

14. The emergency egress (1) of any one of claims 7 through 13, wherein
at least one of an injection pressure of said fluid, a compressibility of said fluid, a volume of said inflated bag (4b), a bonding material of said bonding layer, an adhesion of said bonding layer, a thickness (T) and/or a width (W, W') of said bonding layer according to claim 9, said confined volume according to claim 11, a structural stability of said interface layer (4) and a structural stability of said cover panel (2) are adjusted such that said cover panel (2) remains attached to said chassis or fuselage (3) when inflating said bag (4b).

15. A vehicle (10), especially an aircraft, having at least one emergency egress (1) according to any one of claims 7 through 14.
